# EUROPEAN PATENT SPECIFICATION

(11) **EP 0 689 653 B1**
(45) Date of publication and mention of the grant of the patent: **20.08.1997**
(21) Application number: 94910634.8
(22) Date of filing: 17.03.1994
(51) Int. Cl.: F16L 55/10

(54) **METHOD AND DEVICE FOR FORMING A PLUG IN A CONDUIT**
VERFAHREN UND VORRICHTUNG ZUR HERSTELLUNG EINES STOPFENS IN EINEM ROHR
PROCEDE ET DISPOSITIF DE REALISATION D'UN TAMPON DANS UNE CONDUITE

(30) Priority: 18.03.1993 SE 9300907
(43) Date of publication of application: 03.01.1996
(73) Proprietor: BEISE, Lothar, S-252 57 Helsingborg (SE)
(72) Inventor: BEISE, Lothar, S-252 57 Helsingborg (SE)
(74) Representative: Lindberg, Klas Valter Bo
(86) International application number: SE9400234
(87) International publication number: WO9421955

(56) References cited:
- WO-A-89/01110
- DE-C- 3 815 416
- US-A- 3 559 423

## Description

This invention relates to a method for shutting off a liquid-filled conduit temporarily. More specifically, the invention concerns a method for forming a plug in a liquid-filled conduit by local cooling thereof, so that the liquid in the conduit passes from a liquid to a solid state.

The invention further relates to a device for implementing the inventive method.

Replacing conduits, conduit parts, leaky valves or fittings in a conduit system can be problematic if the system, for one reason or another, cannot be emptied of the liquid contained therein. Thus, for instance, if a district heating system were to be completely emptied in winter, the temperature would drop rapidly at the subscribers', e.g. single-dwelling houses, apartment blocks, and industries. In addition, a huge labour input would be required to vent the entire system and the radiators connected thereto.

The processing industry, e.g. the cellulose industry, running round-the-clock production offers another example. In such industries, it may take from a few hours to several days to start up the process when there has been a stoppage, and stoppages are therefore avoided as far as possible.

The power industry, for instance, is not only restricted by practical and financial considerations but also by extremely high safety requirements, which is particularly applicable to nuclear power plants. Even the layman will appreciate that the entire cooling system of a nuclear power plant cannot reasonably be emptied for replacing conduits or fittings, even after the reactor core has been shut off.

Thus, there are many areas where conduit systems have to be partly replaced without being emptied and despite the possible occurrence of autocirculation. Considering the conduit dimensions commonly used as well as the amount of liquid contained in such systems, it will be appreciated that very special requirements are placed not only on the mode of operation but also on the equipment to be employed.

State-of-the-art techniques are based on the provision, upstream and downstream from the conduit section to be replaced, of a box-like and preferably heat-insulated container surrounding the conduit. This basic idea is specifically described in e.g. SE-B-135,309 or US-A 4,433,556. When thus arranged, the box-like container is filled with carbon dioxide ice or dry ice having a temperature of -78°C. It is to be understood that large amounts of carbon dioxide ice are needed for cooling large-diameter conduits filled with room-temperature liquid, a comparatively large amount of heat having to be cooled off. As is well-known, carbon dioxide ice is the solid state of carbon dioxide (CO₂), which does not melt at atmospheric pressure but passes directly to a gaseous state. A low carbon dioxide content in the air presents no danger to man, whereas a carbon dioxide content of about 5% provokes a state of unconsciousness and a carbon dioxide content of above 8% causes death. Consequently, this mode of operation can only be used at places with efficient ventilation. Another drawback, and a fairly significant one, is that the relatively large amounts of carbon dioxide ice (in some cases exceeding 10 tonnes) give rise to logistic problems, e.g. concerning delivery reliability and supply rate. Furthermore, carbon dioxide ice is a fairly expensive commodity.

Depending on the aimed-at cooling rate, use may also be made of another mode of operation, in which dry ice is "boiled" in ethanol. However, alcohol has the disadvantage of a relatively low flash point (12°C in the case of ethanol), which here means that, under the strict regulations currently in force, no sparking operations are permissible.

DE-OS-1,525,867 discloses a third mode of operation, in which a cooling liquid is circulated in a circuit. The cooling liquid is fed to a box of the above type, which encloses a conduit section, and the cooling liquid is supplied in a manner to surround the conduit section to be cooled. Thus, the liquid absorbs heat from the conduit section, and hence from the liquid contained therein, and this heat is removed to be given off in the heat exchanger. After some time, a plug forms inside the conduit and blocks it, thereby enabling the replacement of intermediate fittings and conduit sections.

EP-A1-105 155 is concerned with yet another problem, namely how to adapt to different conduit diameters a reusable box or container through which flows a cooling medium. The EP specification proposes that use be made of replaceable inserts of fibreboard, each having a hole of suitable diameter for the conduit. In actual practice, it has, however, been found that such inserts require fairly extensive sealing, since the cross-sectional shape of the conduit may, for reasons of practicality, deviate up to 3% from a perfectly circular shape. The conduit may thus be oval in cross-section. In most cases, the circumferential surface of the conduit also is uneven, e.g. owing to longitudinal weld joints.

Irrespective of the fact that each new project requires specially-designed boxes, which may delay the replacement of e.g. a leaking fitting in a nuclear power plant, it will be appreciated that the use of divisible boxes or containers, through which flows a considerable amount of cooling medium in a cooling circuit, increases the risk of leakage from the boxes or containers. Considering that aggressive liquids or gases are often used as cooling media in order to produce the aimed-at low temperature, a leak may have disastrous consequences. When forming a plug by freezing in one or more parallel conduits that are relatively close to one another ("twin conduits"), which is a common occurrence in district heating systems, it often is most complicated, and sometimes even impossible, to arrange a box of the above type at the intended site. Similar problems are faced in, for instance, pipe bends and T- or Y-junctions.

It should also be observed that austenitic conduits may be damaged by treatment at excessively low temperatures, such as freezing by means of carbon dioxide ice or liquid nitrogen.

One object of the present invention is, therefore, to provide a method for cooling a conduit section in a simple and safe manner without resorting to the use of large amounts of cooling medium.

Another object of the invention is to provide a device for implementing the inventive method.

Yet another object of the invention is to provide a device by means of which the temperature can be reduced under controlled conditions.

A further object of the invention is to provide a device that can be used for different conduit diameters, parallel conduits, T- or Y-junctions, and so forth.

According to the invention, these and other objects are achieved by a method as defined in the characterising clause of appended claim 1, as well as by a device as defined in characterising clause of appended claim 6.

Preferred embodiments and improvements of the invention are achieved by the features recited in the appended subclaims. Thus, it is advantageous to use a flexible sleeve holding a contact medium which surrounds the conduit section to be cooled as well as the cooling duct wound round the conduit section.

An embodiment of the inventive device for forming a plug in a liquid-filled conduit by local cooling thereof, so that the liquid in the conduit passes from a liquid to a solid state, will be described in more detail below with reference to the accompanying drawings, in which
Fig. 1 is a schematic view illustrating the use of a device according to the invention;
Fig. 2 is a side view of a sleeve used in one embodiment of the invention; and
Fig. 3 is a sectional view of the sleeve in Fig. 2, taken along line A-A.

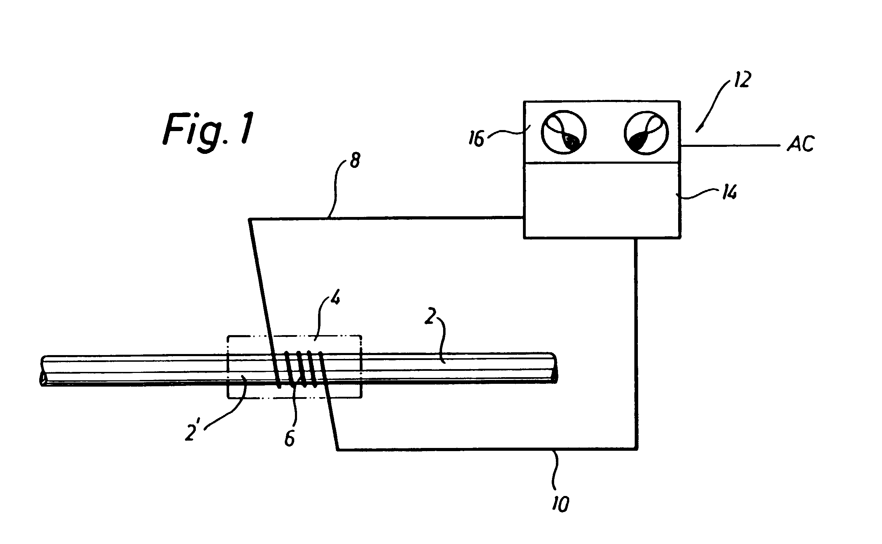

Fig. 1 schematically illustrates one embodiment of the inventive device for implementing the method defined in appended claim 1 for forming a plug in a liquid-filled conduit 2. This embodiment includes a heat-insulating sleeve 4 which substantially encloses a cooling coil 6 consisting of a cooling duct 8, 10 which is helically wound round the conduit 2, as well as the conduit section 2' in this area. The feed duct 8 and the return duct 10 connect the cooling coil 6 to a cooler 12. Use can be made of any prior-art cooler having a heat-exchanger unit 14 and a compressor unit 16, e.g. connected to the public power network AC. It should be mentioned already at this stage that, in some cases, it is advantageous to connect two coolers 12 or compressors 16 in series and/or to connect a spare power installation for reasons that will appear further below.

It is to be understood that the feed duct 8 and the return duct 10 may be branched, in which case a single cooler 12 serves to cool another conduit section as well (not shown). Instead of being connected in parallel, the cooling coils 6 may, of course, be connected in series, which is especially advantageous when plugs are to be formed in substantially parallel conduits that are close to one another.

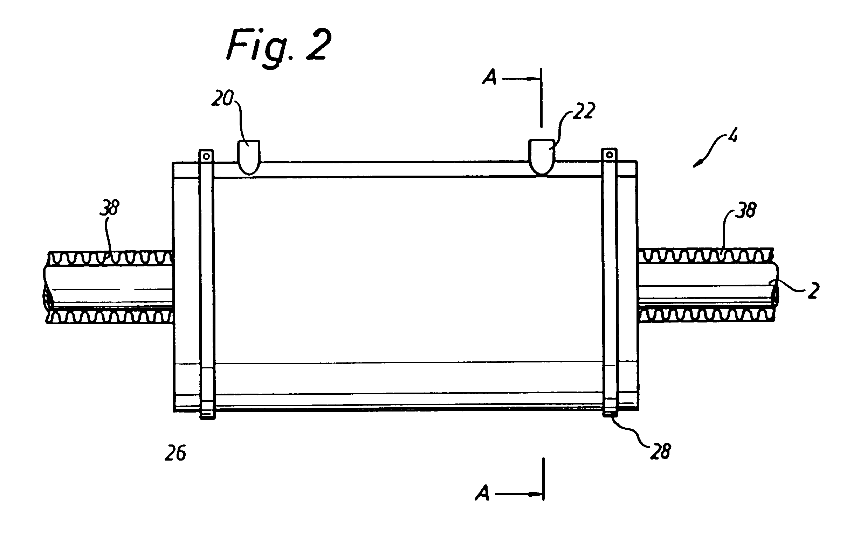

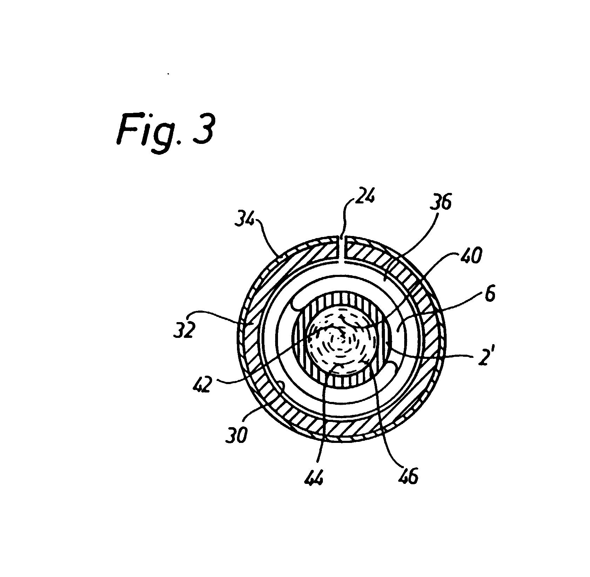

Figs 2 and 3 illustrate an embodiment of the inventive device. As appears from Fig. 1, a cooling coil 6 is formed by arranging a cooling duct 8, 10 on the outside of the conduit section 2'. It is to be understood that, in actual practice, the cooling duct is wound round the conduit. In the area of the cooling coil 6, the cooling duct is made of a material of good thermal conductivity and good flexibility. Outside the area of the cooling coil 6, and in particular outside the sleeve 4 surrounding the cooling coil 6 in the embodiment illustrated, the cooling duct 8, 10 is heat-insulated. The sleeve 4 arranged round the conduit section 2' essentially consists of an elongate, cylindrical casing having a longitudinal slot. Lead-ins 20, 22 for the cooling duct 8, 10 are arranged on essentially the same side of the sleeve 4 and preferably consist of recesses formed in the meeting edges of the longitudinal slot 24. As is evident from Fig. 2, the sleeve 4 is further provided with tightening straps 26, 28 for sealing the sleeve 4 round the conduit 2 and along the slot 24.

In the radial direction, the sleeve 4 may be composed of a plurality of layers 30-36 (see Fig. 3 in particular) exhibiting special and appropriate properties. Thus, an inner layer of one embodiment of the inventive sleeve 4 consists of water-tight flexible sheeting 30, e.g. of plastic. An intermediary layer of this embodiment consists of a preferably flexurally elastic, heat-insulating material 32, such as cellular plastic. Naturally, it is perfectly conceivable to use cellular plastic with completely closed cells, i.e. cellular plastic lacking water-absorbing capacity, in which case the inner layer 30 may, of course, be dispensed with. An outer layer of this embodiment consists of a preferably rigid, albeit flexible material, e.g. aluminium, forming a surrounding shell 34.

As appears from Fig. 3, the layers 30-34 have a substantially circular cross-section and are provided with a slot 24 extending in the longitudinal direction of the sleeve 4. Thanks to the longitudinal slot and the flexible and flexurally elastic materials used, the sleeve can be passed over a conduit 2 or a conduit section 2' surrounded by a cooling coil 6. By tightening the straps 26, 28, the longitudinal edges of the slot 24 are pressed against one another, in some cases to the point of overlapping. Tightening of the straps 26, 28 further produces a sealing action between the terminal areas of the sleeve 4 and the conduit 2. As shown in Fig. 3, a gap 36 is formed between the side of the cooling coil 6 facing radially outwards, or the conduit section 2' at least partly surrounded by the cooling coil 6 (see Fig. 1), and the sleeve 4. In a preferred embodiment of the invention, the gap 36 is filled with a contact medium in the mounted state of the sleeve 4. It is to be understood that it is of the utmost importance, in particular in the case of nuclear power plants, that use is not made of any liquids and/or gases that, either separately or in combination with other substances present, might lead to highly exothermic or pressure-increasing reactions. For this reason, water is preferably used as contact medium, having proved to be a good thermal conductor which contributes to the heat transfer from the outside of the length of conduit 2' to the cooling coil 6. In order to reduce thermal losses upstream and downstream from the conduit section 2' when the conduit 2 is being cooled, the conduit 2 is preferably provided with a heat insulation 38, e.g. in the form of plastic sheeting wound round the conduit 2.

Another embodiment of the sleeve (not shown) employs a flexible cellular-plastic material also used in divers' dry suits. This embodiment comprises a liquid-tight sealing means, e.g. in the form of a zip, operable from the two short sides of the sleeve and adapted to seal the longitudinal slot, i.e. seal the sleeve. This embodiment offers many opportunities as to the arrangement of the cooling ducts and is particularly well suited for use in connection with vertical conduits. The sleeve is easily adapted to different conduit diameters with the aid of elongate strips made of the same material, which are disposed in the elongate slot by means of corresponding zip halves, thereby increasing the circumferential extent of the sleeve and thus enabling the enclosure of larger-diameter conduits.

As appears from Fig. 3, thermometers are arranged inside the conduit section 2'. Preferably, three thermometers 40-44 are positioned on one diameter, namely one thermometer 42 at the centre of the conduit section 2' and one thermometer 40 and one thermometer 44 positioned at the respective ends of the diameter. In addition, the conduit 2 should be provided with a barometer (not shown) for monitoring the pressure increase when a plug 46 is building up in substantially circular fashion from the inside of the conduit towards its centre. It should be observed that the pressure increase may be considerable and even cause the conduit or conduit section to explode. In order to avoid such an occurrence, it may be necessary to reduce the pressure in the conduit.

When e.g. a leaky valve or a conduit section 2' is to be replaced, a cooling coil 6 is initially arranged on the conduit 2 in the area where a plug 46 is to form inside the conduit section 2'. The cooling coil 6 may consist of a separate hose or duct which is helically wound round the conduit and whose ends are then connected to, respectively, the feed duct 8 and the return duct 10. Preferably, a heat insulation 38 is then arranged round at least part of the conduit 2 outside the area of the cooling coil. Thereafter, the flexible sleeve 4, which is slit in the longitudinal direction, is mounted. The sleeve 4 is first bent apart and then passed over the conduit 2 and the cooling coil 6, respectively, so as to enclose the cooling coil 6 and a conduit section to the right and to the left of the cooling coil 6. The edges of the slot 24 are then caused to meet or overlap, e.g. by means of the zip, whereupon the sleeve 4 is fixed and its short ends are sealed against the conduit 2 by the tightening of belts or straps 26, 28. The ends of the cooling coil 6 that are connected to, respectively, the feed duct 8 and return duct 10 thus pass through lead-ins 20, 22 provided in the sleeve 4.

Before sealing the sleeve 4 completely, the gap 36 between the inside of the sleeve 4 and, respectively, the conduit section 2' and the cooling coil 6 is preferably filled with a liquid or gaseous contact medium, such as water, through a closable opening (not shown) provided in the sleeve. Owing to the flexurally elastic cellular-plastic material used for the sleeve 4, there is produced a sealing action between the sleeve 4 and the conduit 2 when the straps 26, 28 are tightened, even if the sleeve is filled with a contact medium or is used in substantially vertical position.

In view of the risk of leaks, the potential danger of explosions, the heat transfer efficiency, and so forth, a single duct is preferably used as cooling duct, in which case different lengths of the duct form the feed duct 8, the cooling coil 6 and the return duct 10, these being connected to a suitable cooler 12. For the same reason, a non-aggressive cooling liquid, such as a water-based saline solution, is preferably used as heat-exchanging medium. A suitable salt is KCl. If the cooler employed has a sufficiently high capacity, several cooling coils 6 may be connected in series or in parallel and be supplied with cooling liquid from the same cooler.

In contrast to the prior art, the interior of the sleeve 4 thus does not form part of the cooling circuit made up of the cooling coil 6, the feed and return ducts 8, 10, and the heat-exchanger unit 14 of the cooler 12. The sleeve is filled with a contact medium which may be separate from the cooling medium circulating in the cooling circuit and which is intended to contribute to improve, and hence speed up, the heat transfer between the outside of the conduit section 2' and the cooling coil 6. When the contact medium employed is a liquid, such as water, it has been found that the liquid is drawn by capillary action into small cavities found on the circumferential surfaces of the conduit and the cooling coil. Thus, a large contact surface is formed between the circumferential surface of the conduit and the cooling coil, rendering the heat transfer more efficient. Thus, it is particularly advantageous to clean the circumferential surface of the conduit at an initial stage, thereby to remove any dirt that might prevent efficient heat transfer.

After connecting the compressor unit 16 of the cooler 12 to the public power network and/or to a spare power source, such as a battery unit or a generator, the temperature of the cooling medium drops rapidly to a preset, low value, owing to the fact that the amount of cooling medium employed is fairly small. The temperature that can be achieved is essentially restricted only by the cooling medium employed, and in practice ranges from about -20°C to -40°C. At the same time, heat is transferred from the liquid in the conduit 2 to the conduit itself and further to the cooling coil 6 as well as the contact medium in the sleeve 4. Since the contact medium in the sleeve 4 surrounds those parts of the cooling coil 6 that do not come into direct contact with the circumferential surface of the conduit 2, heat is transferred to the cooling medium in the cooling coil 6 directly through the contact of the cooling coil 6 with the circumferential surface of the conduit 2 and indirectly through the contact of the cooling coil 6 with the surrounding contact medium. After a certain period of time which, depending on, inter alia, the capacity of the cooler 12, the diameter and the wall thickness of the conduit 2, the flow velocity and the heat content of the liquid in the conduit, the cooling medium in the cooling coil, and the contact medium employed, ranges from a half hour or so to several hours, an annular plug 46 begins to build up inside the conduit 2.

As the plug inside the conduit builds up, the pressure in the conduit 2 increases, attaining a maximum value when the plug blocks the conduit completely. Thus, the pressure in the conduit 2 is a reliable indication of the build-up of the plug and the blocking of the conduit. Once the conduit 2 has been blocked, fittings or conduit sections can be removed or replaced. Even though the cooler should operate continuously in order to maintain the temperature of the cooling medium in the cooling coil and, hence, of the plug in the conduit, comparatively long standstills are acceptable. One reason for this is that it takes time before the plug in the conduit loosens owing to the heat insulation provided. Also, the contact medium employed delays melting of the plug in the conduit. However, it will be appreciated that a lengthy power failure, or other such unfavourable events, might have disastrous consequences. It is therefore advisable to connect a spare power unit in the case of a prolonged power failure.

The invention thus provides a new method for forming a plug in a conduit by cooling a conduit section, a cooling hose or duct being wound round the conduit section where the plug is to be formed. In order to enhance the degree of efficiency of the heat transfer from the conduit to the cooling medium in the cooling coil, a sleeve is provided, which substantially encloses the cooling coil and is filled with a contact medium. By choosing a suitable contact medium, the degree of efficiency of the heat transfer can be enchanced even further. By combining a high-capacity cooler with the inventive cooling duct, it is possible to wind the same cooling hose or duct round several parallel conduits, so that several plugs may be formed at the same time. Safety is extremely high, especially since the cooling circuit is closed and non-aggressive cooling and contact media may be chosen.

It goes without saying that those skilled in the art may devise alternative embodiments and other means producing the same technical effect and thus being encompassed by the basic inventive concept. The contact medium employed may thus be a gas, such as air, or a liquid, such as water. Also the sleeve may comprise alternative or additional layers exhibiting special and appropriate properties. The cooling duct may have a special shape in the area of the cooling coil in order to enlarge the contact surface with respect to the circumferential surface of the conduit.

## Claims

1. A method for forming a plug (46) in a liquid-filled conduit (2) by local cooling thereof, so that the liquid in the conduit passes from a liquid to a solid state, **characterised** by the steps of arranging, on the circumferential surface of a conduit section (2'), a hose or duct (8, 10) through which flows a cooling medium, thereby to form a cooling coil (6) round the conduit (2); connecting the cooling duct (8, 10) to a cooler (12) having at least a heat-exchanger unit (14) and a control unit; and presetting a temperature in the control unit of the cooler, this temperature suitably being below the freezing point of the liquid in the conduit, thereby enabling controlled cooling of the conduit (2) to the preset temperature.

2. A method as set forth in claim 1, **characterised** by the step of arranging round the conduit (2) a heat-insulating sleeve (4) substantially enclosing the conduit section (2') and the cooling coil (6).

3. A method as set forth in claim 2, **characterised** by the step of designing the sleeve (4) as an elongate cylinder having a slot (24) extending in the longitudinal direction thereof and provided for mounting the sleeve (4) round the conduit section (2') and the cooling coil (6).

4. A method as set forth in claim 2 or 3, **characterised** by the step of filling the sleeve (4) with a contact medium surrounding those parts of the conduit section (2') and the cooling coil (6) that do not come into direct contact with one another.

5. A method as set forth in any one of claims 1-4, **characterised** by the step of arranging a heat insulation (38) round the conduit (2) on both sides of the conduit section (2').

6. A device for forming a plug (46) in a liquid-filled conduit (2) by local cooling thereof, so that the liquid in the conduit passes from a liquid to a solid state, characterized by a hose or duct (8,10) enabling a cooling medium to pass therethrough, said hose or duct being suitable for being arranged on the circumferential surface of a conduit section (2') thereby forming a cooling coil, said hose or duct (8,10) being connected to a cooler having at least a heat-exchanger unit (14), said cooling medium, when circulating in the thus-formed cooling circuit enabling controlled cooling of the conduit (2) to a preset temperature which, is suitably below the freezing point of the liquid in the conduit (2).

7. A device as set forth in claim 6, **characterised** in that a heat-insulating sleeve (4) substantially encloses the conduit section (2') and the cooling coil (6), said sleeve consisting of an elongate cylinder which has a slot (24) extending in the longitudinal direction thereof and provided for mounting the sleeve (4) round the conduit section (2') and the cooling coil (6).

8. A device as set forth in claim 7, **characterised** in that the sleeve (4) is provided with a substantially liquid-tight sealing means for sealing the longitudinal slot (24) ) after the sleeve (4) ) has been mounted round the conduit section (2') and the cooling coil (6).

9. A device as set forth in claim 7 or 8, **characterised** in that the sleeve (4) is made of a flexurally elastic, heat-insulating cellular-plastic material.

10. A device as set forth in claim 9, **characterised** in that the cellular-plastic material has substantially closed cells.

11. A device as set forth in any one of claims 7-9, **characterised** in that the sleeve (4) has an inner layer of liquid- and/or gas-tight, flexible sheeting facing the cooling coil (6) and the conduit section (2').

12. A device as set forth in any one of claims 7-11, **characterised** in that the sleeve (4) has an outer layer of a rigid, albeit elastic, material, preferably metal.

13. A device as set forth in any one of claims 7-12, **characterised** in that means (26, 28) are provided for releasably fixing the sleeve (4) to the conduit (2).

14. A device as set forth in claim 13, **characterised** in that said means consist of tightening straps (26, 28) extending circumferentially round the sleeve, so that the edges of the slot (24) meet or overlap as the straps (26, 28) are tightened, thus producing a sealing action between the sleeve (4) and the conduit (2).

15. A device as set forth in any one of claims 7-14, **characterised** in that a gap (36), which is defined between the inside of the sleeve (4) and the conduit section (2') and the cooling coil (6), is filled with a contact medium in gaseous or liquid state.

16. A device as set forth in any one of claims 6-15, **characterised** in that the conduit (2) is provided with a heat insulation (38) on both sides of the conduit section (2') and the cooling duct outwardly of a sleeve (4).

17. A device as set forth in any one of claims 6-16, **characterised** in that a pressure transducer is arranged in the conduit (2) for controlling the pressure therein, and that the sleeve (4) has a closable opening through which it can be supplied with a contact medium for more rapid heat transfer to the cooling medium in the cooling coil (6).

## Patentansprüche

1. Verfahren zum Bilden eines Stopfens (46) in einer mit Flüssigkeit gefüllten Leitung (2) durch örtliches Abkühlen dieser, so daß die Flüssigkeit in der Leitung von einem flüssigen in einen festen Zustand übergeht, gekennzeichnet durch folgende Schritte: Anordnen eines Schlauches oder einer Rohrleitung (8, 10), durch den bzw. die ein Kühlmittel fließt, auf der Umfangsfläche eines Leitungsabschnittes (2'), wodurch um die Leitung (2) herum eine Kühlschlange (6) gebildet wird; Anschließen der Kühlrohrleitung (8, 10) an einen Kühler (12) mit mindestens einer Wärmetauschereinheit (14) und einer Steuereinheit; und Voreinstellen einer Temperatur in der Steuereinheit des Kühlers, wobei diese Temperatur zweckmäßigerweise unter dem Gefrierpunkt der Flüssigkeit in der Leitung liegt, wodurch ein gesteuertes Kühlen der Leitung (2) auf die voreingestellte Temperatur ermöglicht wird.

2. Verfahren nach Anspruch 1, gekennzeichnet durch den Schritt, um die Leitung (2) herum eine wärmeisolierende Manschette (4) anzuordnen, die den Leitungsabschnitt (2') und die Kühlspirale (6) im wesentlichen umschließt.

3. Verfahren nach Anspruch 2, gekennzeichnet durch den Schritt, die Manschette (4) als länglichen Zylinder mit einem sich in seiner Längsrichtung erstreckenden Schlitz (24) auszulegen, der dafür vorgesehen ist, die Manschette (4) um den Leitungsabschnitt (2') und die Kühlspirale (6) herum zu montieren.

4. Verfahren nach Anspruch 2 oder 3, gekennzeichnet durch den Schritt, die Manschette (4) mit einem Kontaktmittel zu füllen, das diejenigen Teile des Leitungsabschnittes (2') und der Kühlschlange (6) umgibt, die sich gegenseitig nicht direkt berühren.

5. Verfahren nach einem der Ansprüche 1-4, gekennzeichnet durch den Schritt, um die Leitung (2) herum auf beiden Seiten des Leitungsabschnittes (2') eine Wärmeisolierung (38) anzuordnen.

6. Einrichtung zum Bilden eines Stopfens (46) in einer mit Flüssigkeit gefüllten Leitung (2) durch örtliches Abkühlen dieser, so daß die Flüssigkeit in der Leitung von einem flüssigen in einen festen Zustand übergeht, gekennzeichnet durch einen Schlauch oder eine Rohrleitung (8, 10), durch den bzw. die ein Kühlmittel fließen kann, wobei der Schlauch oder die Rohrleitung auf der Umfangsfläche eines Leitungsabschnittes (2') angeordnet werden können, wodurch eine Kühlschlange gebildet wird, wobei der Schlauch oder die Rohrleitung (8, 10) an einen Kühler mit mindestens einer Wärmetauschereinheit (14) angeschlossen ist, wobei das Kühlmittel bei Zirkulieren in dem so gebildeten Kühlkreis ein gesteuertes Kühlen der Leitung (2) auf eine voreingestellte Temperatur ermöglicht, die zweckmäßigerweise unter dem Gefrierpunkt der Flüssigkeit in der Leitung (2) liegt.

7. Einrichtung nach Anspruch 6, dadurch gekennzeichnet, daß eine wärmeisolierende Manschette (4) den Leitungsabschnitt (2') und die Kühlspirale (6) im wesentlichen umgibt, wobei die Manschette aus einem länglichen Zylinder mit einem sich in seiner Längsrichtung erstreckenden Schlitz (24) besteht, der dafür vorgesehen ist, die Manschette (4) um den Leitungsabschnitt (2') und die Kühlspirale (6) herum zu montieren.

8. Einrichtung nach Anspruch 7, dadurch gekennzeichnet, daß die Manschette (4) mit einem im wesentlichen flüssigkeitsdichten Verschlußmittel versehen ist, um den länglichen Schlitz (24) abzudichten, nachdem die Manschette (4) um den Leitungsabschnitt (2') und die Kühlspirale (6) herum montiert worden ist.

9. Einrichtung nach Anspruch 7 oder 8, dadurch gekennzeichnet, daß die Manschette (4) aus einem biegeelastischen, wärmeisolierenden Schaumkunststoff hergestellt ist.

10. Einrichtung nach Anspruch 9, dadurch gekennzeichnet, daß das Schaumkunststoffmaterial im wesentlichen geschlossene Zellen aufweist.

11. Einrichtung nach einem der Ansprüche 7-9, dadurch gekennzeichnet, daß die Manschette (4) eine innere Schicht aus flüssigkeits- und/oder gasdichter flexibler Verkleidung aufweist, die der Kühlschlange (6) und dem Leitungsabschnitt (2') zugewandt ist.

12. Einrichtung nach einem der Ansprüche 7-11, dadurch gekennzeichnet, daß die Manschette (4) eine äußere Schicht aus einem steifen, aber dennoch elastischen Material, vorzugsweise Metall, aufweist.

13. Einrichtung nach einem der Ansprüche 7-12, dadurch gekennzeichnet, daß Mittel (26, 28) vorgesehen sind, um die Manschette (4) lösbar an der Leitung (2) zu befestigen.

14. Einrichtung nach Anspruch 13, dadurch gekennzeichnet, daß die Mittel aus Spannbändern (26, 28) bestehen, die sich umfangsmäßig um die Manschette herum erstrecken, so daß sich die Ränder des Schlitzes (24) bei Anziehen der Bänder (26, 28) treffen oder überlappen, wodurch zwischen der Manschette (4) und der Leitung (2) eine Abdichtwirkung erzielt wird.

15. Einrichtung nach einem der Ansprüche 7-14, dadurch gekennzeichnet, daß ein zwischen der Innenseite der Manschette (4) und dem Leitungsabschnitt (2') und der Kühlspirale (6) definierter Zwischenraum (36) mit einem Kontaktmittel in gasförmigem oder flüssigem Zustand gefüllt ist.

16. Einrichtung nach einem der Ansprüche 6-15, dadurch gekennzeichnet, daß die Leitung (2) außerhalb einer Manschette (4) auf beiden Seiten des Leitungsabschnittes (2') und der Kühlleitung mit einer Wärmeisolierung (38) versehen ist.

17. Einrichtung nach einem der Ansprüche 6-16, dadurch gekennzeichnet, daß ein Druckwandler in der Leitung (2) zum Steuern des Druckes darin angeordnet ist und daß die Manschette (4) eine schließbare Öffnung aufweist, durch die ihr ein Kontaktmittel zur schnelleren Übertragung von Wärme an das Kühlmittel in der Kühlspirale (6) zugeführt werden kann.

## Revendications

1. Procédé pour former un bouchon (46) dans un tube (2) rempli de Liquide en soumettant le tube à un refroidissement local, si bien que le liquide dans le tube passe de l'état liquide à l'état solide, caractérisé par les étapes consistant à: arranger, sur la surface circonférentielle d'une section de tube (2'), un tuyau flexible ou un conduit (8, 10) à travers lequel s'écoule un milieu réfrigérant pour ainsi former un refroidisseur tubulaire (6) autour du tube (2); raccorder le conduit de refroidissement (8, 10) à un refroidisseur (12) possédant au moins une unité d'échange de chaleur (14) et une unité de commande; et prérégler une température dans l'unité de commande du refroidisseur, cette température étant de manière appropriée inférieure au point de congélation du liquide dans le tube pour ainsi permettre le refroidissement contrôlé du tube (2) à la température préréglée.

2. Procédé selon la revendication 1, caractérisé par l'étape consistant à arranger autour du tube (2) un manchon (4) procurant une isolation thermique, qui renferme essentiellement la section de tube (2') et le refroidisseur tubulaire (6).

3. Procédé selon la revendication 2, caractérisé par l'étape consistant à concevoir le manchon (4) sous forme d'un cylindre allongé dans lequel est pratiquée une fente (24) s'étendant dans la direction longitudinale du premier cité et servant au montage du manchon (4) autour de la section de tube (2') et du refroidisseur tubulaire (6).

4. Procédé selon la revendication 2 ou 3, caractérisé par l'étape consistant à remplir le manchon (4) d'un milieu de contact entourant les parties de la section de tube (2') et du refroidisseur tubulaire (6) qui ne viennent pas se mettre en contact direct l'un avec l'autre.

5. Procédé selon l'une quelconque des revendications 1 à 4, caractérisé par l'étape consistant à arranger une isolation thermique (38) autour du tube (2) de part et d'autre de la section de tube (2').

6. Dispositif pour former un bouchon (46) dans un tube (2) rempli de liquide en soumettant ce dernier à un refroidissement local de telle sorte que le liquide dans le tube passe de l'état liquide à l'état solide, caractérisé par un tuyau flexible ou un conduit (8, 10) permettant le passage d'un milieu réfrigérant, ledit tuyau flexible ou ledit conduit étant approprié pour être arrangé sur la surface circonférentielle d'une section de tube (2') pour ainsi former un refroidisseur tubulaire, ledit tuyau flexible ou ledit conduit (8, 10) étant raccordé à un refroidisseur comportant au moins une unité d'échange de chaleur (14), ledit milieu réfrigérant, lorsqu'il circule dans le circuit de refroidissement ainsi formé, permettant de refroidir le tube (2) de manière réglée jusqu'à une température préférée qui est, de manière appropriée, inférieure au point de congélation du liquide dans le tube (2).

7. Dispositif selon la revendication 6, caractérisé en ce qu'un manchon (4) procurant une isolation thermique renferme essentiellement la section de tube (2') et le refroidisseur tubulaire (6), ledit manchon étant constitué d'un cylindre allongé dans lequel est pratiquée une fente (24) s'étendant dans la direction longitudinale du premier cité et servant au montage du manchon (4) autour de la section de tube (2') et du refroidisseur tubulaire (6).

8. Dispositif selon la revendication 7, caractérisé en ce que le manchon (4) est muni d'un moyen d'étanchéification essentiellement étanche aux liquides pour étancher la fente longitudinale (24) après avoir monté le manchon (4) autour de la section de tube (2') et du refroidisseur tubulaire (6).

9. Dispositif selon la revendication 7 ou 8, caractérisé en ce que le manchon (4) est réalisé en une matière plastique alvéolaire élastique à la flexion et procurant une isolation thermique.

10. Dispositif selon la revendication 9, caractérisé en ce que la matière plastique alvéolaire possède des alvéoles essentiellement fermées.

11. Dispositif selon l'une quelconque des revendications 7 à 9, caractérisé en ce que le manchon (4) comporte une couche interne d'une feuille flexible étanche aux liquides et/ou aux gaz, opposée au refroidisseur tubulaire (6) et à la section de tube (2').

12. Dispositif selon l'une quelconque des revendications 7 à 11, caractérisé en ce que le manchon (4) comporte une couche externe d'une matière rigide, quoiqu'élastique, de préférence en métal.

13. Dispositif selon l'une quelconque des revendications 7 à 12, caractérisé en ce qu'on prévoit des moyens (26, 28) pour fixer le manchon (4) de manière amovible au tube (2).

14. Dispositif selon la revendication 13, caractérisé en ce que lesdits moyens sont constitués par des bandes de serrage (26, 28) s'étendant en direction circonférentielle autour du manchon, si bien que les bords de la fente (24) se rencontrent ou se chevauchent lorsque les bandes (26, 28) sont serrées, en exerçant ainsi une action d'étanchéification entre le manchon (4) et le tube (2).

15. Dispositif selon l'une quelconque des revendications 7 à 14, caractérisé en ce qu'un vide (36), qui est défini entre l'intérieur du manchon (4) et de la section de tube (2') et le refroidisseur tubulaire (6), est rempli avec un milieu de contact à l'état gazeux ou liquide.

16. Dispositif selon l'une quelconque des revendications 6 à 15, caractérisé en ce que le tube (2) est muni d'une isolation thermique (38) de part et d'autre de la section de tube (2') et du conduit de refroidissement à l'extérieur du manchon (4).

17. Dispositif selon l'une quelconque des revendications 6 à 16, caractérisé en ce qu'un transducteur de pression est arrangé dans le tube (2) pour régler la pression qui y règne, et en ce que le manchon (4) possède une ouverture qui peut être fermée, à travers laquelle il peut être alimenté avec un milieu de contact pour réaliser un transfert de chaleur plus rapide au milieu réfrigérant dans le refroidisseur tubulaire (6).
